# EUROPEAN PATENT APPLICATION

(11) **EP 4 628 654 A1**
(43) Date of publication of application: **08.10.2025**
(21) Application number: 25164307.8
(22) Date of filing: 18.03.2025
(51) Int. Cl.: E02B 8/08, A01K 79/00

(54) **METHOD FOR MIGRATING FISH OVER A BARRIER AND DEVICE THEREFOR**

(30) Priority: 19.03.2024 NL 2037288
(71) Applicant: ten Kate, Titus, 9086 CK Hempens (NL); van Dijk, Herman, 8391 VK Noordwolde (NL)
(72) Inventor: ten Kate, Titus, 9086 CK Hempens (NL)
(74) Representative: Arnold & Siedsma

(57) **Abstract**

The present invention relates to a method for migrating fish over a barrier, comprising:
- providing a lure stream through a pipe that is placed over the barrier by pumping water through the pipe from a first end of the pipe to a second end of the pipe;
- opening a valve at the second end of the pipe such that fish are allowed to enter a fish buffer positioned at the second end of the pipe that receives the lure stream;
- closing the valve at the second end of the pipe;
- raising the level of water in the pipe by pumping water in the pipe from a first end of the pipe to a second end of the pipe such that the water level allows fish to migrate through the pipe from the second end to the first end; and
- opening the valves at the first and the second end of the pipe to allow the fish to move away from the vicinity of the pipe.

## Description

The present invention relates to a method for migrating fish over a barrier. The invention further relates to a device for migrating fish over a barrier, and a system for migrating fish over a barrier that comprises the aforementioned device. The barrier can for example be a dyke separating two bodies of water.

Two bodies of water can be separated by a barrier, for example a dyke. Sometimes it is necessary to transfer water from a first body of water to a second body of water, wherein the first body of water may be positioned lower than the second body of water. This transfer of water is normally done by a pumping station which is pumping water through a pipe which is arranged over or through the barrier. However, fish that wish to migrate from the first body of water to the second body of water cannot may not survive moving through the pump and pipe as they would not survive the pressure differences that are present in the pump and pipe, the shear speed, and due to mechanical damage, especially due to the impact between the rotating blade and fish body.A weir is a small barrier built across a stream or river to control and raise the water level slightly on the upstream side, essentially a small-scale dam. A weir generally allows the water to flow over the crest (which is the top part of the weir), or sometimes underneath some sections. These weirs usually constitute obstructions which are difficult to pass, or even totally impassable, for migratory fish. They are often at right angles to the banks and, since in most cases the crest is horizontal, the flow conditions (velocities and water depths) are uniform across the entire width of the weir. At average or high river discharges, the velocity becomes too high to allow the fish to pass the weir.

Therefore, there is a need for fish migrating system which is easily deployable and can safely transfer fish from a first body of water to a second body of water.

It is an object for the present invention to provide a method which can migrate fish over a barrier in a safe manner.

This object is achieved by a method for migrating fish over a barrier according to the invention, wherein the method comprises the steps of:
- providing a lure stream through a pipe that is placed over the barrier by pumping water through the pipe from a first end of the pipe to a second end of the pipe;
- opening a valve at the second end of the pipe such that fish are allowed to enter a fish buffer positioned at the second end of the pipe that receives the lure stream;
- closing the valve at the second end of the pipe;
- raising the level of water in the pipe by pumping water in the pipe from a first end of the pipe to the second end of the pipe such that the water level allows fish to migrate through the pipe from the second end to the first end; and
- opening the valve at the first end of the pipe and the valve at the second end of the pipe to allow the fish to move away from the vicinity of the pipe.

An advantage of the method according to the invention is that the method can be deployed over any barrier that separates two bodies of water without the need of large civil works to be carried out. This provides a method that can be used in different environments, for example two bodies of water separated by a dyke or two bodies of water separated by a sluice.

Additionally, as the method can be first deployed at a first location over a first barrier and later be relocated to a second location over a second barrier, the devices necessary to execute the method, such as pumps, pipes and valves, can be used for longer time periods thereby reducing the cost of operation. Alternatively, or additionally, the method provides the ability to use fewer devices, as it is not necessary to provide these devices at every location. This reduces overall costs. Alternatively, or additionally, the method provides the ability to temporarily use the devices necessary to execute the method for a short time at a desired location.

The method provides the ability for fish to migrate from the second end of the pipe to the first end of the pipe. The first end of the pipe is positioned in a first body of water and the second end of the pipe is positioned a second body of water. This migration would, without the method, not be possible due to the barrier being positioned between the bodies of water and thus blocking the fish from migrating from the second body of water to the first body of water. Optionally, the second body of water is positioned lower than the first body of water. The first body of water and second body of water may be positioned on the same level. The present invention is applicable independent of the level difference between the first and second body of water. The first body of water may be freshwater, while the second body of water may be saltwater. Alternatively, the second body of water may be freshwater, while the first body of water may be saltwater. It may also be the case that both the first and the second body of water are both saltwater, or both freshwater.

By raising the level of water in the pipe after closing the valve at the second end of the pipe a migrating stream is created in the pipe. The migrating stream substantially fills the whole pipe with water, such that fish are able to move into the pipe. The migrating stream is also a lure stream, as the fish naturally want to swim against the flow of water. Therefore, the fish will migrate in the opposite direction as the flow of water and thereby migrate in the right direction.

Another advantage of the method is that the method can easily be executed in the reverse direction, meaning that the lure stream is pumped from the second end to the first end. When the method is executed in the reverse direction, the fish will migrate from the first end to the second end.

The opening of the valves at the first and the second end of the pipe to allow the fish to move away from the vicinity of the pipe may be executed at the same time, or subsequently. In a first example the first valve is opened first and the second valve is opened after opening the first valve. In a second example the second valve is opened first and the first valve is opened after opening the second valve.

The water that is pumped from the first end of the pipe to the second end of the pipe is pumped by a first pump of a first water regulating unit. The first water regulating unit is positioned at a first end of the pipe. A second water regulating unit may be positioned at a second end of the pipe. The fish buffer may be a second fish buffer that is arranged in or on a second water regulating unit. The first water regulating unit and the second water regulating unit may be substantially identical, meaning in the present context that they comprise substantially the same parts, and both may comprise at least one of the following features:
- a housing wherein a fish buffer is provided;
- a pump for pumping water from outside the housing into the fish buffer;
- a valve that can open or close off an opening from the fish buffer to outside the housing; and
- a pressure regulating device that is provided on the housing and is configured to open in case a predetermined pressure threshold is exceeded.

The valve that is closed at the second end of the pipe may be a second valve of the second water regulating unit. The water level in the pipe is raised with the pump of the first water regulating unit. The fish buffer is in fluid connection with the pipe. The first and second end of the pipe discharge into the first and second fish buffer respectively.

The pressure regulating device can be set differently for different situations. The opening of the pressure regulating device based on the predetermined pressure threshold for example can depend on the height of the barrier that has to be overcome. The pressure regulating device is able to regulate the pressure in the water regulating unit when the pump is still pumping at the moment the pipe is substantially wholly filled with water. By opening the pressure regulating device the water can be released from the water regulating unit.

The pump provided on the first and/or second water regulating unit may be a fish-friendly pump.

The lure stream is a flow of water from the first end to the second end that is sufficient for fish to be attracted to the water, but insufficient to migrate from the first end of the pipe to the second end of the pipe.

The lure stream may also be called a lure flow, counter flow, counter current, bait flow or bait current.

In an embodiment according to the invention the method further comprises the step of closing the valve at the first end of the pipe during the step of providing a lure stream.

The valve at the first end of the pipe is arranged on or at the first water regulating unit.

An advantage of closing the valve at the first end of the pipe is that the housing is closed off, apart from the fluid connection with the pipe. In this way, water can effectively be pumped from outside of the housing into the fish buffer and subsequently into the pipe.

In an embodiment according to the invention the method further comprises the step of opening a pressure regulating device that is configured to open in case a predetermined pressure threshold is exceeded.

The pressure regulating device may be a further valve that is provided on the first water regulating unit and/or the second water regulating unit. The invention may comprise a first pressure regulating device that is provided on the first water regulating unit and a second pressure regulating device that is provided on the second water regulating unit.

An advantage of the pressure regulating device is that excess water can be discharged from the fish buffer. This may be necessary in case the fish buffer is completely filled with water. By providing the pressure regulating device, the duration of the lure current is prolonged.

In an embodiment according to the invention the method further comprises the step of executing a fish deterrence action during the step of opening the one or more valves.

An advantage of the fish deterrence action is that the fish are deterred away from the device by the fish deterrence action. This ensures that the fish also migrate outwards of the device such and will not migrate back through the pipe when a next cycle starts in the opposite direction.

In an embodiment according to the invention executing a fish deterrence action comprises turning on a fish deterring light source.

An advantage of the fish deterring light source is that the fish is effectively deterred from the device. Another advantage is that the activation of the fish deterring light source can easily be controlled by a controller, thereby automating the deterrence action.

In an embodiment according to the invention the pressure in the pipe is regulated based on the height difference between a first or second end of the pipe and the highest point of the pipe relative to the first or second end.

The pressure may be regulated based on the height difference between the first and/or second water regulating unit and the highest point of the pipe. The pressure difference may be regulated by a controller. The pressure difference may be regulated by switching the pump on or off, depending on the measured pressure. The pipe and/or the water regulating units may comprise a pressure sensor that is coupled to the controller such that the controller receives pressure information of one or more parts of the device.

In an embodiment according to the invention the method further comprises the step of measuring the number of fish that migrates through the pipe.

The information of the number of fish migrating through the pipe can be used to determine the effectiveness of the method. Alternatively or additionally, the measured number of fish can be used to determine the population of fish that are present on both sides of the barrier. This is useful information for government agencies that maintain the bodies of the water.

In an embodiment according to the invention the method further comprises the step of opening an air valve positioned in the pipe to allow excess air to exit from the pipe.

Preferably, the air valve is positioned in a middle section of the pipe, that is preferably positioned at or near the highest point of the barrier. During the releasing of the lure stream or the migrating stream the water in the pipe may be stuck in the pipe due to the vacuum created by the water leaving the pipe. By opening the air valve the water is able to move out of the pipe, as the vacuum is discontinued or removed.

In an embodiment according to the invention the speed of the lure stream is in the range of 0.01 - 0.6 m/s, preferably in the range of 0.2-0.4 m/s, and most preferably is 0.3 m/s.

Experiments have shown that the abovementioned speeds of the lure stream provide an optimal attraction for fish.

The invention further relates to device for migrating fish over a barrier, wherein the device comprises:
- a pipe extending between a first end and a second end that is configured to be placed over the barrier;
- two water regulating units that are respectively arranged at and connected to the first end and the second of the pipe, wherein each of the water regulating units comprise:
   ∘ a fish buffer that is in fluid connection with the associated end of the pipe and is further provided with an opening;
   ∘ a pump that is connected to the fish buffer and is configured to pump water into the fish buffer; and
   ∘ a valve that is configured to close off the opening of the fish buffer.

The system has similar effects and advantages as described for the method for migrating fish over a barrier. In particular, the system provides the ability to migrate fish from the first water regulating unit to the second water regulating unit, and vice versa. The first water regulating unit is in use positioned in a first body of water, while the second water regulating unit is in use positioned in a second body of water.

Each of the pumps of the water regulating devices is configured to pump water through the pipe. The first pump of the first water regulating device may be configured to pump water from the first end of the pipe through the pipe to the second end of the pipe. The second pump of the second water regulating device may be configured to pump water from the second end of the pipe to the first end of the pipe.

In an embodiment according to the invention the water regulating units further comprise a pressure regulating device attached to the fish buffer that is configured to regulate an excess of water in the fish buffer.

An advantage of the pressure regulating device is that excess water can be discharged from the fish buffer. This may be necessary in case the fish buffer is completely filled with water. By opening the pressure regulating device, the duration of the lure current can be prolonged.

In an embodiment according to the invention the device further comprises a controller that is operatively connected to the water regulating units and is configured to control the pumps and the valves.

The controller is configured to execute the method steps according to the invention. An advantage of the controller is that the method steps can be executed in an automated manner. The controller may be operatively connected to the first and/or second water regulating unit. Alternatively, the first and/or second water regulating unit may each comprise a controller. The controller may be configured to control the first and/or second pump, the first and/or second valve, the first and/or second pressure regulating device, and/or the air valve.

In an embodiment according to the invention the water regulating units further comprise a fish deterrence device.

An advantage of the fish deterrence device is that the fish can be deterred away from the device. This ensures that the fish also migrate outwards of the device such that fish will not migrate back through the pipe when a next migrating cycle starts in the opposite direction.

In an embodiment according to the invention the fish deterrence device comprises a fish deterring light source.

An advantage of the fish deterring light source is that the fish is effectively deterred from the device. Another advantage is that the activation of the fish deterring light source can easily be controlled by a controller, thus providing the possibility for automation.

In an embodiment according to the invention the pipe is provided with an air valve that is configured to allow excess air to exit from the pipe.

The air valve is a valve which is configured to both introduce air in the pipe and expel air out the pipe. In other words, the air valve is an air inlet and outlet valve. During the releasing of the lure stream or the migrating stream the water in the pipe may be stuck in the pipe due to the vacuum created by the water leaving the pipe. By opening the air valve the water is able to move out of the pipe, as the vacuum is discontinued or removed.

In an embodiment according to the invention the device further comprises a fish detection system.

The information of the number of fish migrating through the pipe that is measured by the fish detection system can be used to determine the effectiveness of the device. Alternatively or additionally, the measured number of fish can be used to determine the population of fish that are present on both sides of the barrier.

In an embodiment according to the invention the fish detection system comprises a camera. The invention further relates to a system for migrating fish over a barrier, comprising:
- a barrier;
- a pump that pumps water from a first side of the barrier to a second side of the barrier; and
- a device according to the invention, wherein the first and second water regulating units are positioned at opposite sides of the barrier and the pipe is provided over the barrier.

The system has similar effects and advantages as described for the method and the device for migrating fish over a barrier.

Further advantages, features and details are elucidated on the basis of preferred embodiments thereof, wherein reference is made to the accompanying drawings, wherein:
- figure 1, a schematic view of an example of a fish migrating device according to the invention;
- figure 2, a schematic view of an example of a step in the fish migrating method according to the invention;
- figure 3, a schematic view of an example of a further step in the fish migrating method according to the invention;
- figure 4, a schematic view of an example of an even further step in the fish migrating method according to the invention;
- figure 5, a schematic view of a system for migrating fish; and
- figure 6, a schematic view of a device for migrating fish over a dyke.

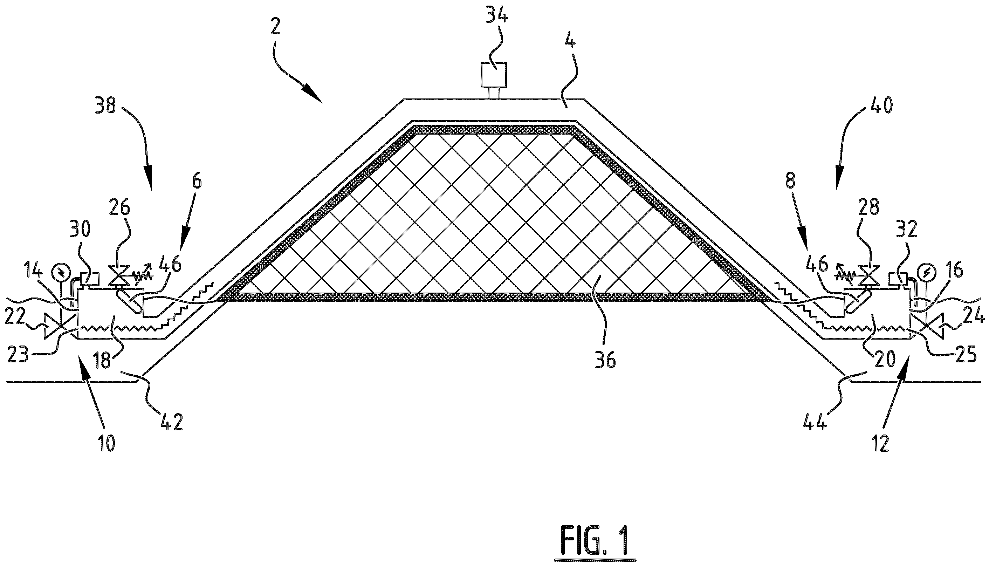

Fish migrating device 2 (figure 1) comprises pipe 4 which extends from first end 8 to second end 6. At first end 8 and second end 6 respectively first water regulating device 12 and second water regulating device 10 are connected thereto. First water regulating device 12 and second water regulating device 10 comprise respectively first housing 16 and second housing 14 wherein respectively first fish buffer 20 and second fish buffer 18 are provided.

First water regulating device 12 and second water regulating device 10 are further provided with respectively first valve 24 and second valve 22. First valve 24 and second valve 22 are provided with first opening 25 and second opening 23 that connect first fish buffer 20 and second fish buffer 18 to the outside of first housing 16 and second housing 14. In use first valve 24 and second valve 22 are positioned under water. The top side of first water regulating device 12 and second water regulating device 10 is respectively provided with first pressure regulating device 28 and second pressure regulating device 26 which in the illustrated embodiment is provided as a valve. Pressure regulating devices 26, 28 are configured to allow an excess of water to be expelled from fish buffers 18, 20 in order to be able to maintain the lure current, for as long as the situation requires. Water regulating devices 10, 12 further comprise first pump 32 and second pump 30 which are configured to pump water from outside housings 14, 16 into fish buffers 18, 20. In the illustrated embodiment pumps 30, 32 are embodied as a fish deterring submersible pump. Pipe 4 is in its middle section provided with (de-)airing valve 34. (De-)airing valve 34 can be opened in order to allow excess air to be expelled from pipe 4 in order to allow air to be introduced to prevent vacuum being created.

Pipe 4 is arranged over barrier 36. First water regulating device 12 is positioned at first side 40 of barrier 36 and second water regulating device 10 is positioned on second side 38 of barrier 36. On first side 40 first body of water 44 is located while on second side 38 second body of water 42 is located. In the illustrated embodiment, first body of water 44 is freshwater and second body of water 42 is saltwater.

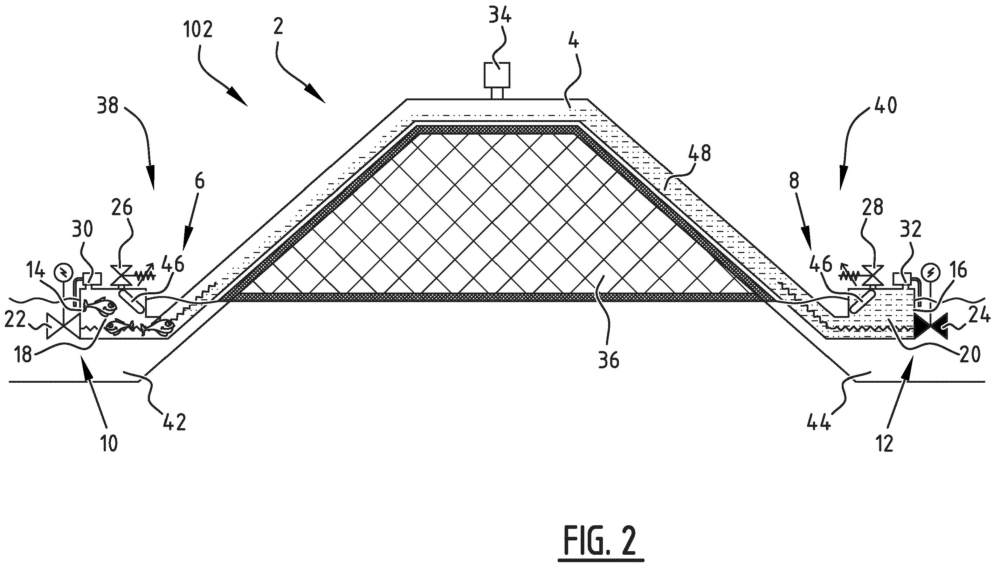

In first step 102 (figure 2) first valve 24 is closed off. Due to first valve 24 being closed off, freshwater cannot exit from first fish buffer 20 to the outside of first housing 16. First pump 32 is pumping water from first body of freshwater 44 into second housing 14 of second water regulating device 10. As first fish buffer 20 is in fluid connection with pipe 4, water will run into and through pipe 4 from first end 8 towards second end 6 of pipe 4. Second valve 22 is open such that freshwater coming from first end 8 can exit water second water regulating device 10 into second body of saltwater 42. The freshwater coming into second body of saltwater 42 urges the fish in second body of saltwater 42 to enter second fish buffer 18. In this way fish that wish to migrate from second body of saltwater 42 to first body of freshwater 44 are collected in second fish buffer 18 of second water regulating device 10. Lure stream 48 which is pumped from first end 8 towards second end 6 of pipe 4 is sufficient to attract fish but not sufficient for fish to migrate through pipe 4 towards first end 8.

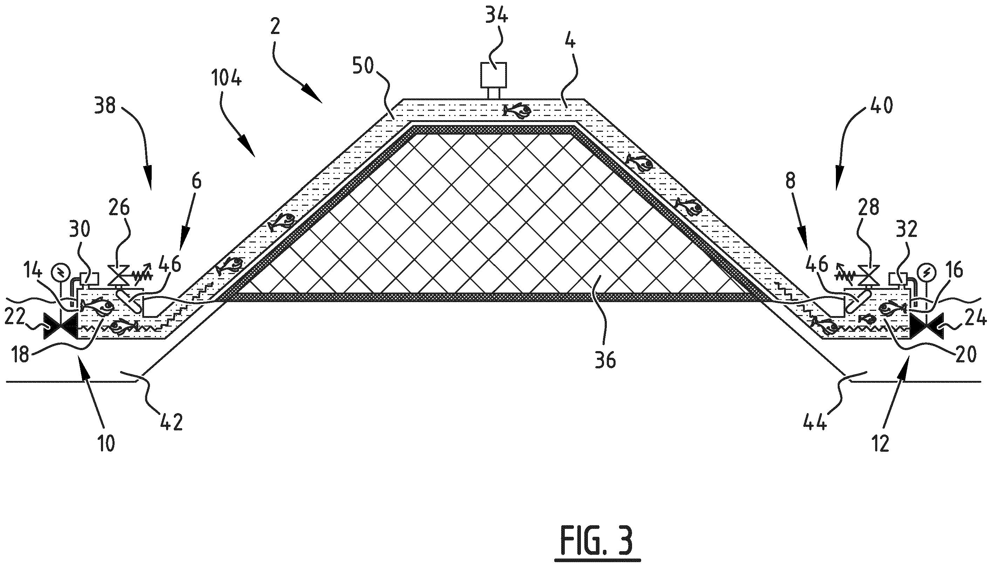

In second step 104 (figure 3) second valve 22 and first valve 24 are closed off. First pump 32 is still pumping water from first body of freshwater 44 from first end 8 to second end 6 of pipe 4. Due to second valve 22 being closed off, the water coming from first end 8 of pipe 4 cannot exit second fish buffer 18 of second water regulating device 10. Therefore, pipe 4 is completely filled with water. In this way, a migrating stream 50 is created in pipe 4. This provides the opportunity for the fish which are located in second water regulating device 10 to migrate themselves through pipe 4 from second end 6 towards first end 8. In this way, fish are able to migrate from second body of saltwater 42 to first body of freshwater 44. In case the pressure in second water regulating device 10 becomes too high, second pressure regulating device 26 can be opened to discharge the excess of water from second fish buffer 18 towards second body of saltwater 42. In this way, the lure current can be maintained for as long as the situation requires.

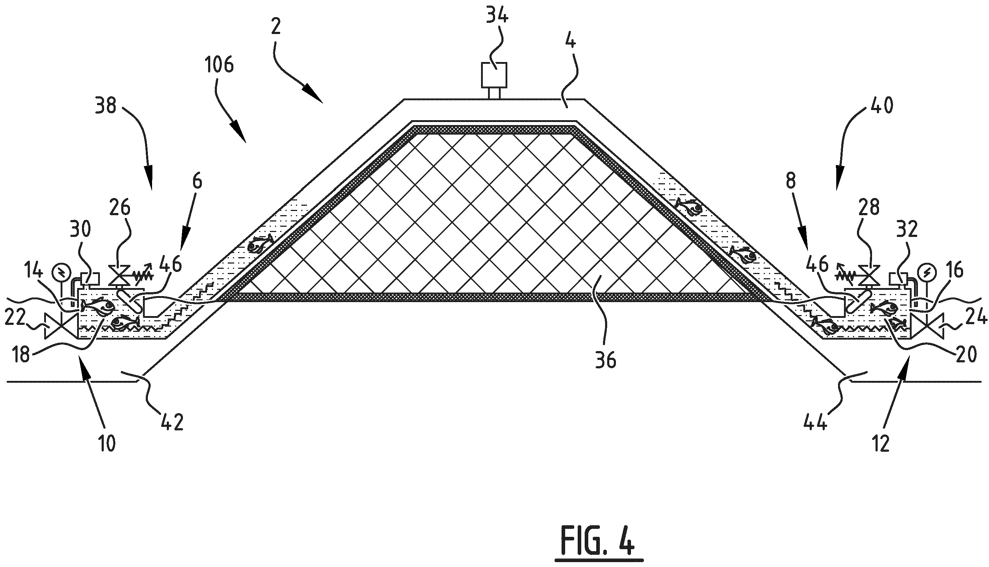

In third step 106 (figure 4) second valve 22, first valve 24 and (de-)airing valve 34 are opened in a controlled manner. At the same time, first pump 32 stops pumping water into pipe 4. Alternatively, first valve 24 can be opened first and second valve 22 can be opened afterwards, which might increase the migration in the performed direction. Due to second valve 22 and first valve 24 being (at least partially) open and pipe 4 being positioned higher than second water regulating device 10 and first water regulating device 12, the water which is present in pipe 4 will exit pipe 4 in a restrained manner towards the water regulating devices 10, 12. Water that is present on second side 38 of barrier 36 will flow towards second water regulating device 10 and water present on first side 40 of barrier 36 will flow towards first water regulating device 12.

Due to the water flowing out of pipe 4, the fish which migrated into pipe 4 will also move out of pipe 4 into either second body of water 42 or first body of water 44, depending on the side on which the fish was present. As most fish wishing to migrate moved from second end 6 through pipe 4 towards first end 8, most fish wishing to migrate will exit device 2 through first water regulating device 12. At the time the water in tube 4 has been lowered and the fish cannot swim back from first end 8 to second end 6, valve 22 is opened completely in a controlled manner. In an embodiment, fish deterring light sources 46 are lit to urge the fish to leave second water regulating device 10 and first water regulating device 12. In this way fish can effectively be transported from second body of water 42 to first body of water 44.

For the skilled person it is clear that, as device 2 is symmetrically arranged, device 2 can also be used to transport fish from first body of water 44 to second body of water 42. In such an embodiment a lure stream is generated by second water regulating device 10 by pumping with second pump 30 into pipe 4 such that lure stream 48 and migrating stream 50 flow from second end 6 to first end 8 of pipe 4.

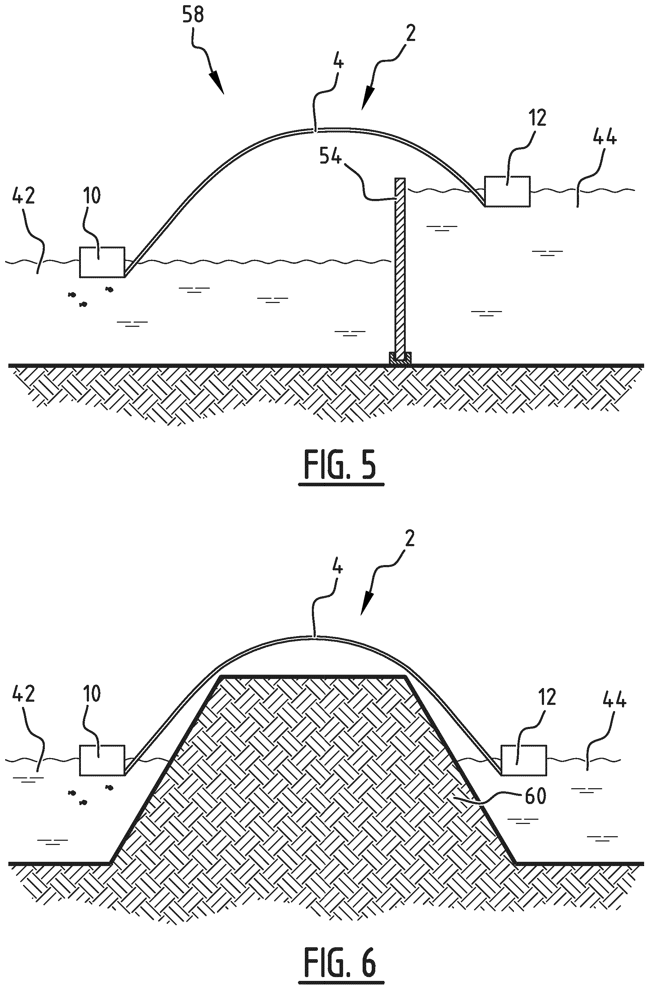

System 58 (figure 5) comprises device 2 that is provided with pipe 4 extending between second water regulating device 10 and first water regulating device 12. Device 2 is arranged over barrier 54, which in the illustrated embodiment is embodied as a (temporary) cofferdam or weir. Barrier 54 comprises an obstruction which is positioned against first body of water 44 and second body of water 42. By providing system 58, fish are able to migrate in a safe manner past barrier 54.

Dyke 60 (figure 6) is on opposite sides provided with first body of water 44 and second body of water 42. Device 2 is provided over dyke 60, wherein pipe 4 extends between second water regulating device 10 that is positioned in second body of water 42 and first water regulating device 12 that is positioned in first body of water 44. The water level of first body of water 44 and second body of water 42 is in the illustrated embodiment substantially at the same level.

The present invention is by no means limited to the above described preferred embodiments thereof. The rights sought are defined by the following clauses within the scope of which many modifications can be envisaged.

## Claims

1. Method for migrating fish over a barrier, comprising:
- providing a lure stream through a pipe that is placed over the barrier by pumping water through the pipe from a first end of the pipe to a second end of the pipe;
- opening a valve at the second end of the pipe such that fish are allowed to enter a fish buffer positioned at the second end of the pipe that receives the lure stream;
- closing the valve at the second end of the pipe;
- raising the level of water in the pipe by pumping water in the pipe from a first end of the pipe to a second end of the pipe such that the water level allows fish to migrate through the pipe from the second end to the first end; and
- opening the valves at the first and the second end of the pipe to allow the fish to move away from the vicinity of the pipe.

2. Method according to claim 1, further comprising:
- closing the valve at the first end of the pipe during the step of providing a lure stream.

3. Method according to claim 1 or 2, further comprising opening a pressure regulating device that is configured to open in case a predetermined pressure threshold is exceeded.

4. Method according to claim 1, 2 or 3, further comprising executing a fish deterrence action during the step of opening the one or more valves.

5. Method according to claim 4, wherein executing a fish deterrence action comprises turning on a fish deterring light source.

6. Method according to any one of the foregoing claims, wherein the pressure in the pipe is regulated based on the height difference between a first or second end of the pipe and the highest point of the pipe relative to the first or second end.

7. Method according to any one of the foregoing claims, further comprising measuring the number of fish that migrates through the pipe.

8. Method according to any one of the foregoing claims, further comprising opening an air valve positioned in the pipe to allow the water to be released from the pipe.

9. Method according to any one of the foregoing claims, wherein the speed of the lure stream is in the range of 0.01 - 0.6 m/s, preferably in the range of 0.2 - 0.4 m/s, and most preferably is 0.3 m/s.

10. Device for migrating fish over a barrier, comprising:
- a pipe extending between a first end and a second end that is configured to be placed over the barrier;
- two water regulating units that are respectively arranged at and connected to the first end and the second of the pipe, wherein each of the water regulating units comprise:
∘ a fish buffer that is in fluid connection with the associated end of the pipe and is further provided with an opening;
∘ a pump that is connected to the fish buffer and is configured to pump water into the fish buffer; and
∘ a valve that is configured to close off the opening of the fish buffer.

11. Device according to claim 10, wherein the water regulating units further comprise a pressure regulating device attached to the fish buffer that is configured to that is configured to open in case a predetermined pressure threshold is exceeded, and/or further comprising a controller that is operatively connected to the water regulating units and is configured to control the pumps and the valves.

12. Device according to claim 10 or 11, wherein the water regulating units further comprise a fish deterrence device, wherein the fish deterrence device preferably comprises a fish deterring light source.

13. Device according to any one of claims 10-12, wherein the pipe is provided with an air valve that is configured to allow the water to be released from the pipe.

14. Device according to any one of claims 10-13, further comprising a fish detection system, wherein the fish detection system preferably comprises a camera.

15. System for migrating fish over a barrier, comprising:
- a barrier;
- a pump that pumps water from a first side of the barrier to a second side of the barrier; and
- a device according to any one of the claims 10-14, wherein the first and second water regulating units are positioned at opposite sides of the barrier and the pipe is provided over the barrier.
